# EUROPEAN PATENT SPECIFICATION

(11) **EP 2 732 155 B1**
(45) Date of publication and mention of the grant of the patent: **10.06.2015**
(21) Application number: 12778453.6
(22) Date of filing: 04.10.2012
(51) Int. Cl.: F03D 9/00, F03D 11/02

(54) **POWER GENERATING APPARATUS OF A RENEWABLE ENERGY TYPE HAVING HYDRAULIC PUMP ALSO OPERABLE IN MOTORING MODE**
VORRICHTUNG ZUR STROMERZEUGUNG ÜBER ERNEUERBARE ENERGIE MIT EINER AUCH IN EINEM MOTORMODUS BETREIBBAREN HYDRAULIKPUMPE
APPAREIL GÉNÉRATEUR D'ÉLECTRICITÉ UTILISANT UN TYPE D'ÉNERGIE RENOUVELABLE, POURVU D'UNE POMPE HYDRAULIQUE POUVANT AUSSI FONCTIONNER EN MODE D'ENTRAÎNEMENT

(43) Date of publication of application: 21.05.2014
(73) Proprietor: MITSUBISHI HEAVY INDUSTRIES, LTD., Tokyo 108-8215 (JP)
(72) Inventor: TSUTSUMI, Kazuhisa, Tokyo 108-8215 (JP); CALDWELL, Niall, Loanhead, Midlothian, Lothian EH209TB (GB); ROBERTSON, Alasdair, Loanhead, Midlothian, Lothian EH209TB (GB)
(74) Representative: Hindle, Alistair Andrew
(86) International application number: PCT/JP2012/006384
(87) International publication number: WO 2014/054072

(56) References cited:
- WO-A1-2012/022924
- WO-A2-2011/147997

## Description

### Technical Field

The disclosure relates to the field of power generating apparatus of a renewable energy type, such as a wind turbine generator, having a turbine and a hydraulic transmission incorporating a hydraulic pump driven from the rotor by a rotating drive shaft coupled to a turbine and at least one hydraulic motor which receives pressurised fluid from the hydraulic pump and drives a generator.

### Background Art

It has been proposed that in a wind turbine or other power generating apparatus of a renewable energy type having a rotor, a hydraulic pump driven by the rotor could also be operated as a motor on rare occasions to rotate the rotor to a desired position, usually for maintenance purposes. For example, it is useful to be able to control the position of the rotor, so that the blades of a typical three blade wind turbine are oriented with one blade pointing directly downwards, and the other two blades pointing upwards at 30° to the horizontal, to facilitate the landing of a helicopter on top of the wind turbine nacelle. This is especially useful for the maintenance of large offshore wind turbines.

However, it would not be desirable to compromise the function of the hydraulic pump during its normal operating mode, in which it functions only as a pump, in order to enable it to be used as a motor. EP 0494236 (Salter and Rampen) discloses a type of hydraulic machine which can be operated as a pump or a motor, in which the volume of working fluid displaced by each working chamber, on each cycle of working chamber volume, can be selected by active control of electronically controlled low pressure valves which regulate the flow of fluid between the working chambers and the low-pressure manifold, and active control of electronically controlled high-pressure valve, which regulate the flow of fluid between the working chambers and the high-pressure manifold. ,

Machines of this type are very useful in power generating apparatus of a renewable energy type, because the displacement can be very rapidly varied, enabling them to efficiently capture energy from the wind or other fluctuating renewable energy sources. However, although such machines can operate as a pump using only one electronically controlled valve per working chamber (the low pressure valve), with a simple check valve being employed as high pressure valve, it is also necessary for the high pressure valve to be electronically controlled for them to function as a motor. This is because it is necessary to actively close the high pressure valve shortly before bottom dead centre to enable opening of the low pressure valve at around bottom dead centre enabling pressurised fluid to be vented to the low pressure manifold during an exhaust stroke, ready for further pressurised fluid to be received from a high pressure manifold to drive a piston during the next intake stroke.

There are significant technical demands placed on the design of electronically controlled high-pressure valves, due to the requirement for them to open and close quickly in demanding applications, and the requirement to open against at least some pressure differential. Accordingly, it is not desirable to introduce components which might fail, particularly as maintenance of wind turbines and similar devices is relatively difficult due to the size of the pumps and their location, which may be on top of a wind turbine tower, which may be offshore.

Accordingly, the disclosure addresses the technical problem of modifying a hydraulic pump which uses simple passively opening high pressure valves (such as check valves) but in which the volume of working fluid displaced by each working chamber can be selected on each cycle of working chamber volume by active control of a low pressure valve, to enable the pump to also carry out motoring in limited circumstances, without compromising the ability of the pump to work reliably for a long period of time.

Furthermore, it is known from WO 2012/022934 (Caldwell et al.) to provide a pump having a ring cam with working and breathing faces which are different and which are optimised to facilitate efficient operation in a preferred direction of rotation. Similarly, it is known from WO 2012/022954 (Rampen and Fox) to provide a pump having a ring cam which is arranged so that the highest forces are exerted on only the faces of the ring cam which face in one sense, with discontinuities in the working surface being found only in the other faces. These developments enable efficient and reliable operation of a pump, but mean that carrying out motoring with the machine shaft rotating in the same direction as during pumping, by a mechanism according to EP 0494236, could lead to damage to the cam.

Accordingly, some embodiments of the invention address the technical problem of providing a pump which can carry out occasional low speed motoring despite having a cam which is asymmetric (having working faces and breathing faces of different arc length) or otherwise configured to facilitate reliable pumping rather than motoring.

### Summary of Invention

According to a first aspect of the invention there is provided a power generating apparatus of a renewable energy type which generates power from a renewable energy source, comprising:
a rotating drive shaft driven by the renewable energy source during normal operation; a hydraulic pump having a rotating machine shaft driven by the rotating drive shaft; at least one hydraulic motor which is driven by pressurized hydraulic fluid supplied from the hydraulic pump; a generator coupled to the hydraulic motor; a high pressure line through which a discharge side of the hydraulic pump is in fluid communication with an intake side of the hydraulic motor; and a low pressure line through which an intake side of the hydraulic pump is in fluid communication with a discharge side of the hydraulic motor,
wherein the hydraulic pump comprises:
   a controller, a high pressure manifold in communication with the high pressure line, a low pressure manifold in communication with the low pressure line, a plurality of working chambers, each of which is defined by a cylinder and a piston reciprocating within the cylinder; a plurality of electronically controlled low pressure valves for regulating the flow of hydraulic fluid between the working chambers and the low pressure manifold, a plurality of primary high pressure valves for regulating the flow of hydraulic fluid between the working chambers and the high pressure manifold,
   which plurality of primary high pressure valves cannot open against a pressure differential, and a plurality of auxiliary high pressure valves for regulating the flow of hydraulic fluid between a source of pressurised hydraulic fluid and at least some of the working chambers, which are actively controlled and can open against a pressure differential,
wherein the controller is configured (e.g. programmed) to close the low pressure valves in phased relation to cycles of working chamber volume during selected cycles of working chamber volume to cause the rotating machine shaft to rotate in a normal direction of rotation and the hydraulic pump to pump a variable displacement of working fluid during normal operation, and wherein the controller is also configured (e.g. programmed) to actively control the auxiliary high pressure valves in phased relation to cycles of working chamber volume to cause the hydraulic pump to operate in a motoring mode in which the rotating machine shaft rotates in the opposite direction to the normal direction of rotation and selected low pressure valves are closed when the respective working chambers have a volume less than the mean of the maximum and minimum of working chamber volume during cycles of working chamber volume to facilitate opening of the auxiliary high pressure valves.

The source of pressurised fluid may be the high pressure manifold, which may for example be in fluid communication with an accumulator which stores pressurised hydraulic fluid and also functions as a source of pressurised fluid. The source of high pressure fluid may be an auxiliary pump, for example an auxiliary pump which directs fluid directly or indirectly into the high pressure manifold.

Typically, the primary high pressure valves and auxiliary high pressure valves are configured such that, for the same pressure difference across the respective valves, the rate of flow of hydraulic fluid through the auxiliary high pressure valves is less than the rate of flow of hydraulic fluid through the primary high pressure valves. Thus, the auxiliary high pressure valves provide a lower flow rate than the primary high pressure valves (for a given pressure difference). The ratio of the rate of flow of hydraulic fluid through the auxiliary high pressure valves to the rate of flow of hydraulic fluid through the primary high pressure valves may for example be less than 0.5, less than 0.2 or less than 0.1.

Typically, the speed of rotation of the rotating machine shaft in the motoring mode is less than 10% or the maximum speed of rotation of the rotating machine shaft during normal operation. In some embodiments the speed of rotation of the rotating machine shaft in the motoring mode is variable across a continuous range. In some embodiments, the speed of rotation of the rotating machine shaft in the motoring mode is controlled to adopt one of a plurality of (e.g. fewer than five, fewer than four or fewer than three) discrete speeds of rotation. This rough speed control is adequate for the motoring mode, which is intended for rare use. It may be that the controller is configured so that selected low pressure valves are closed when the volume of the respective working chambers is less than the minimum of working chamber volume plus 25%, or plus 12.5%, of the volume difference between the minimum and maximum volume of the working chambers during cycles of working chamber volume.

In normal operation of a pump in which the volume of working fluid displaced during each cycle of working chamber volume is selected on each cycle of working chamber volume by selectively closing low pressure valves, the low pressure valves are usually closed within 10% of a maximum of working chamber volume to maximise the amount of fluid which is pumped during a normal pumping cycle.

In the motoring mode, rotation is relatively slow. The auxiliary high pressure valves need not be optimised for fast opening and closing. It is not important if they are not energy efficient as the motoring mode is only used rarely. They can be selected to minimise disruption to efficient pumping, for example to require minimal volume to be added to the working chambers. Typically the motoring mode is not used during normal power generation. Typically the motoring mode is used during maintenance.

Low pressure valves may be closed by active closure, for example, by energising a solenoid, or by stopping holding them open, for example, by de-energising a solenoid which is holding the valve open against a biasing mechanism which would otherwise close the valve.

As the primary high pressure valves cannot open against a pressure differential they cannot be used for motoring. Typically, the primary high pressure valves are check valves, such as spring biased poppet valves. Spring biased poppet valves are very reliable and it is desirable to provide a hydraulic pump which can also be used for low speed motoring which uses spring biased poppet valves during pumping to ensure reliable operation.

The hydraulic pump comprises a rotating machine shaft (coupled to the rotating shaft driven by the renewable energy source), wherein the phase of the cycles of working chamber volume is coupled to the angular position of the machine shaft. In order to enable the active control of valves in phased relation to cycles of working chamber volume, the hydraulic pump typically comprises a shaft position sensor operable to determine the angular position of the rotating machine shaft, to enable the phase of cycles of working chamber volume to be measured.

It may be that the pump comprises a rotating machine shaft having a cam which drives cycles of working chamber volume during normal operation, wherein the cam is configured such that the variation in working chambers volume with machine shaft angle does not have reflection symmetry about any shaft angle. Thus, the cam is asymmetric and can be better optimised to drive pumping than a cam configured so that the variation in working chamber volume is sinusoidal

Typically, the cam is configured to maximise reliability of the pump in normal pumping mode. Typically, the cam has working faces which drive the pistons when pressurised hydraulic fluid is delivered to the high pressure manifold through the primary high pressure valves, during normal operation, and breathing faces on which the pistons bear when hydraulic fluid is received from the low pressure manifold through the low pressure valves during normal operation. Typically, the angle by which the shaft rotates while the pistons bear on the working faces is greater than the angle by which the shaft rotates while the pistons bear on the breaking faces, for example by a ratio of at least 125%. Typically, the working chamber pressure which would lead to fracture of the ring cam is greater when the pistons bear on the working faces than the breathing faces. Thus, it is important to avoid excessive forces bearing on the breathing faces in the motoring mode.

This arrangement provides long term reliable operation during normal pumping, distributing the forces from the action of high pressure fluid on the pistons over a larger surface area of the cam, but makes it difficult to carry out motoring. This is because in normal motoring in this type of machine, as is known from EP 0494236 (Salter and Rampen), forces from piston rollers arising from high pressure fluid would bear on the breathing faces, not the working faces, leading to a risk, or the likelihood of damage. However, because the rotating shaft rotates in the opposite direction the forces from piston rollers arising from high pressure fluid during the low speed motoring mode will bear on the working faces which can resist the resulting forces. This has been facilitated by a new valve operating cycle in which the low pressure valves are selectively closed when the respective working chambers are within 10% of a minimum of working chamber volume during selected cycles of working chamber to facilitate opening of the high pressure valves.

Typically, the rotating shaft has a plurality of cams disposed circumferentially around the rotating shaft. The working chambers may be formed into a plurality of banks which are circumferentially spaced around the rotating shaft. It may be that the working chambers are formed into a plurality of groups of adjacent axially spaced working chambers, each group driven by a different cam. The or each cam may be multi-lobal (i.e. having a plurality of maxima of radius and a corresponding plurality of minima of radius). The cams may be ring cams. The pistons are coupled to cam following elements which are driven by the cams. The cam following elements may be piston rollers. The cam following elements may be integral with the piston, for example, piston shoes.

Typically, the high pressure manifold includes primary branch channels which extend to the primary high pressure valves. The primary branch channels may merge into a high pressure merging channel through which the primary branch channels communicate with the high pressure line.

Typically, the low pressure manifold includes low pressure branch channels which extend to the low pressure valves. The low pressure branch channels may merge into a low pressure merging channel through which the low pressure branch channels communication with the low pressure line.

Preferably, only a subset of working chambers have an auxiliary high pressure valve associated with them.

The selected low pressure valves which are closed when the respective working chambers are within 10% of a minimum of working chamber volume are typically those which are associated with working chambers that have an auxiliary high pressure valve associated with them.

As motoring can be slow, by providing auxiliary high pressure valves to supply high pressure fluid to only a subset of working chambers, the machine can be kept simple, with fewer more complex valves which could reduce reliability. The total dead volume arising from the presence of auxiliary high pressure fluid connections in working chambers is reduced as only some working chambers will have such auxiliary connections. Anti-return check valves may be provided between each auxiliary high pressure valve and the working chambers to which the respective auxiliary high pressure valve is connected oriented to prevent the flow of hydraulic fluid from the working chambers into the auxiliary manifold, for example in the case of failure of the auxiliary high pressure valve.

Typically, the high pressure manifold communicates with an auxiliary manifold which extends to the auxiliary high pressure valves. The auxiliary manifold may comprise a single auxiliary supply line and a plurality of auxiliary channels which merge into the single auxiliary supply line through which the auxiliary channels communicate with the high pressure line (through the high pressure manifold). An isolation valve may be provided to selectively isolate the auxiliary manifold and thereby the auxiliary high pressure valves from the high pressure line (and the remainder of the high pressure manifold). The isolation valve typically isolates the auxiliary manifold from the high pressure manifold.

This is advantageous as it enables the auxiliary high pressure valves to be isolated as a group. As the auxiliary high pressure valves are actively controlled they are more complex than the primary high pressure valves, and thus are less reliable. If an auxiliary high pressure valve fails in an open position it would create a problem potentially creating an open path between high pressure manifold and working chamber, thus pressurizing the working chamber at inappropriate moment in position cycle. However, by this mechanism, the auxiliary high pressure valves can all be isolated, improving reliability for the primary pumping function.

In an embodiment, the block may contain eight high pressure and eight low pressure valves in fluid communication with eight respective working chambers. Within the block, two of those high pressure connections to the working chamber may be arranged for fluid supply during motoring mode.

The power generating apparatus may comprise at least one pressure reducing element, such as a pressure reducing valve, to reduce the pressure of the hydraulic fluid supplied to the auxiliary high pressure valves to below the pressure in the hydraulic line. A pressure reducing element can be provided in the single auxiliary supply line, where present. The pressure reducing element may comprise a pressure relief valve which limits the pressure of hydraulic fluid supplied to the auxiliary high pressure valves, for example a pressure relief valve in communication with the auxiliary manifold. When the pressure of hydraulic fluid in the auxiliary manifold exceeds a threshold, hydraulic fluid may drain to a sink (typically the low pressure manifold or a tank) through the pressure reducing element.

The isolation valve may also function as the pressure reducing element, for example the isolation valve may be a proportional flow valve. The isolation valve may therefore be operable to seal the auxiliary high pressure valves from the high pressure line or to allow a variable amount of hydraulic fluid to flow to the auxiliary high pressure valves. This is especially useful where the pump could be damaged by excessive forces in the motoring mode unless the pressure was restricted, for example, where the or each cam is asymmetric, as described above.

The pressure reducing element may reduce the pressure of the hydraulic fluid supplied to the auxiliary high pressure valves to below the pressure in the high pressure line, for example to below 75%, 50% or 25% of the pressure in the high pressure line.

The power generating apparatus may comprise at least one flow rate controlling element, such as a variable flow valve, to control the rate at which pressurised fluid enters the working chambers through the auxiliary high pressure valves. A flow rate controlling element can be provided in the single auxiliary supply line, where present. The isolation valve and/or the pressure reducing element may also function as the flow rate controlling element. However, the flow rate controlling element may be formed by a first valve and the pressure reducing element formed by a second valve. The isolation valve may be a third valve. This is advantageous as it allows each component to be optimised to its particular function (isolation, pressure reducing, flow control).

The pump may comprise a casing which accommodates the working chambers, the high pressure manifold, the low pressure manifold, the primary high pressure valves, the auxiliary high pressure valves and the low pressure valves.

It may be that the rotating machine shaft has a plurality of cams disposed circumferentially around the rotating shaft, which drive the pistons during normal operation,
wherein the high pressure manifold includes primary branch channels which extend to the primary high pressure valves and merge into a high pressure merging channel through which the primary branch channels communicate with the high pressure line;
the low pressure manifold includes low pressure branch channels which extend to the low pressure valves and merge into a low pressure merging channel through which the low pressure branch channels communicate with the low pressure line;
the pump comprises a casing which accommodates the working chambers, the high pressure manifold, the low pressure manifold, the primary high pressure valves, the auxiliary high pressure valves and the low pressure valves;
and
wherein the auxiliary high pressure valves supply high pressure fluid to only a subset of working chambers.

It may be that each auxiliary high pressure valve regulates the flow of pressurised fluid to a single working chamber. However, it may be that at least one individual auxiliary high pressure valve within the plurality of auxiliary high pressure valves regulates the flow of high pressure fluid to a plurality of working chambers (typically fewer than all of the working chambers), typically working chambers which are in phase with each other or have a phase within 25°, or preferably within 15° of each other. Typically, a plurality of check valves (typically one per working chamber) will be provided to prevent flow between a said in phase individual auxiliary high pressure valve and the said plurality of working chambers. Typically one check valve is needed per working chamber as even when the working chambers are in phase, it may be that they are not enabled/disabled simultaneously. Such situation requires a check valve for each to stop pressure generated in one working chamber draining via another working chamber.

Typically, the cylinders are formed into a plurality of banks which are axially spaced along the rotating shaft. Preferably, the auxiliary high pressure valves are associated with cylinders at one or both axial ends of the plurality of axially spaced groups. Preferably, the cylinders are formed into one or more cylinder blocks. Preferably the cylinder blocks define an end face at an axial end and the auxiliary high pressure valves are located in the axial end face. Alternately, the auxiliary high pressure valves may be located in a radial outwards face of the cylinder blocks. The valves may be secured and located in the cylinder blocks by a simple screw thread.

In order to determine the volume of working fluid displaced in the low-speed motoring mode, the controller selects the fraction of cycles of working chamber volume for which the low pressure valves are closed and the auxiliary high pressure valves are opened, causing the working chamber to execute an active cycle in which there is a net displacement of working fluid to thereby control the speed of rotation of the rotating shaft. The controller may also select the timing of closure of the selected low pressure valve in the motoring mode relative to cycles of working chamber volume, and/or select the timing of opening of the auxiliary high pressure valves to select the amount of working fluid displaced during each motoring cycle to thereby control the speed of rotation of the rotating shaft.

It may be that there is further provided an auxiliary pump (functioning as a source of pressurised fluid) which is operable to output pressurised fluid to the auxiliary high pressure valves (e.g. to the high pressure manifold where the high pressure manifold is in fluid communication with the auxiliary high pressure valves, either directly or through an auxiliary manifold, or to an auxiliary manifold which is separate to the high pressure manifold), wherein the controller is operable to temporarily stop closing selected low pressure valves in the motoring mode if the pressure of hydraulic fluid supplied to the auxiliary high pressure valves (e.g. the pressure in the high pressure manifold or the auxiliary high pressure manifold) falls below a threshold while the auxiliary pump functions and thereby increases the pressure of hydraulic fluid supplied to the auxiliary high pressure valves (e.g. the pressure in the high pressure manifold or the auxiliary high pressure manifold). In some embodiments the high pressure manifold will have multiple manifold portions which are permanently or selectively fluidically connected to each other and it may be that what is of importance is supplying high pressure fluid to a portion of the high pressure manifold, e.g. a ring manifold portion extending around the auxiliary high pressure valves, when the pressure in that high pressure manifold portion drops below a threshold.

It may be that the power generating apparatus of a renewable energy type comprises a fluid accumulator in continuous or selective communication with the high pressure line and wherein the high pressure fluid from the auxiliary pump bypasses the fluid accumulator. For example, the fluid accumulator may be sealed from the high pressure line (e.g. by a valve) when the auxiliary pump is operating. Alternatively, a non-return valve may be provided in the single auxiliary supply line.

The power generating apparatus of a renewable energy type may further comprise a sensor for determining the position of the rotating drive shaft wherein the controller is configured (e.g. programmed) to cause the pump to operate in the motoring mode until the rotating drive shaft has reached a predetermined position and then to stop rotation of the pump.

The sensor may be a sensor which senses the position of the rotating drive shaft but the sensor may be a sensor which senses the position of the rotating machine shaft. The sensor may be a position sensor.

It may be that the power generating apparatus is a wind turbine generator which generates power from wind as the renewable energy source.

The invention extends in a second aspect to a method of operating a power generating apparatus of a renewable energy type according to the first aspect of the invention, the method comprising operating the pump in a motoring mode by actively controlling the auxiliary high pressure valves in phased relation to cycles of working chamber volume to cause the rotating machine shaft to rotate in the opposite direction to the normal direction of rotation and closing selected low pressure valves when the respective working chambers have a volume less than the mean of their maximum and minimum of working chamber volume during cycles of working chamber volume. Typically, the speed of rotation of the rotating machine shaft in the motoring mode is less than 10% of the maximum speed of rotation of the rotating machine shaft during normal operation.

Further optional features of the second aspect of the invention correspond to those discussed above in relation to the first aspect of the invention.

### Brief Description of Drawings

Embodiments of the invention will now be illustrated with respect to the following drawings in which:
[fig.1]Figure 1 shows a wind turbine generator connected to an electricity network in accordance with an embodiment of the invention;
[fig.2]Figure 2 shows a section of a pump according to the an embodiment for use in the wind turbine generator of Figure 1;
[fig.3]Figure 3 shows a ring cam working surface profile for use in the pump of Figure 2; and
[fig.4]Figure 4 is a schematic diagram of the hydraulic fluid connections to the working chambers in an embodiment of the pump;
[fig.5]Figure 5 is a schematic diagram of the hydraulic fluid connections to the working chambers in an alternative embodiment using a pressure relief valve;
[fig.6]Figure 6 is an isometric view of several cylinder blocks in an embodiment of the invention;
[fig.7]Figure 7 is an isometric view of several cylinder blocks in an alternative embodiment of the invention; and
[fig.8]Figure 8 is a schematic diagram of the hydraulic fluid connections to the working chambers in the embodiment of Figure 7.

### Description of Embodiments

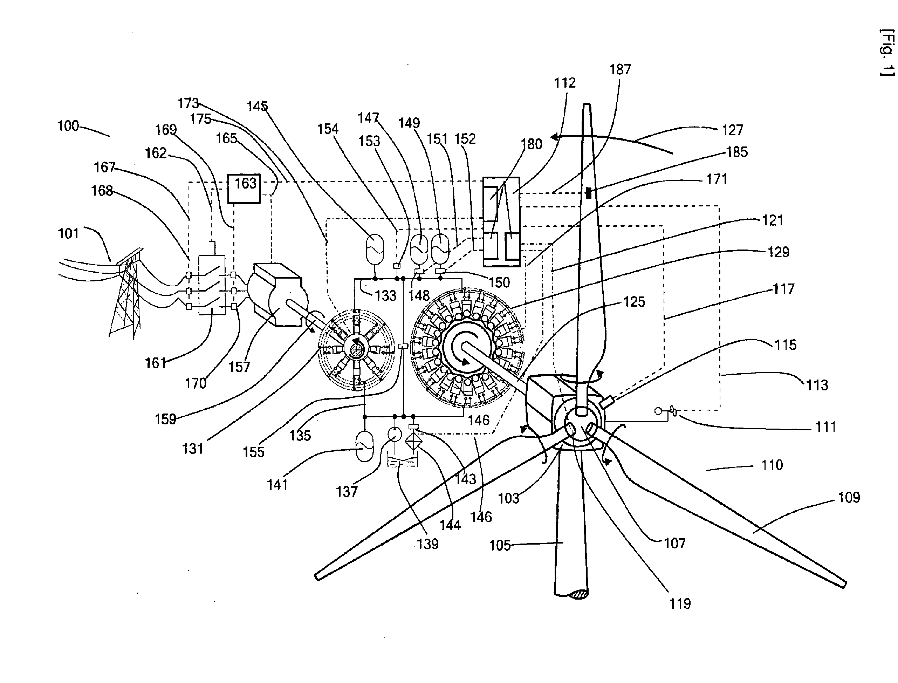

Figure 1 illustrates an example embodiment of the invention in the form of a Wind Turbine Generator (WTG, 100), acting as the renewable energy device, and connected to an electricity network (101). The WTG comprises a nacelle (103) rotatably mounted to a tower (105) and having mounted thereon a hub (107) supporting three blades (109) known collectively as the rotor (110). An anemometer (111) attached externally to the nacelle provides a measured wind speed signal (113) to a controller (112). A rotor speed sensor (115) at the nacelle provides the controller with a rotor speed signal (117). In the example system the angle of attack of each of the blades to the wind can be varied by a pitch actuator (119), which exchanges pitch actuation signals and pitch sensing signals (121) with the controller. The invention could be applied to a WTG without a pitch actuator.

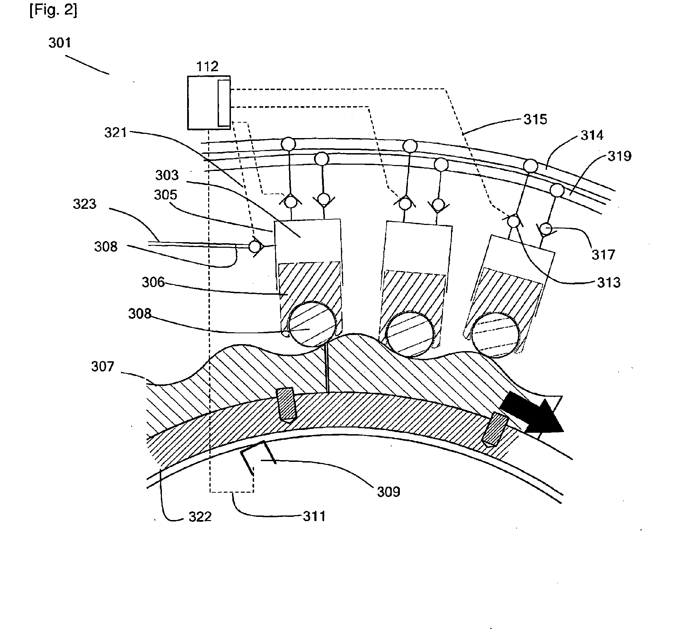

The hub is connected directly to a pump (129), through a rotating drive shaft (125), which rotates in the normal direction of rotor rotation (127) during normal operation. The pump is preferably of the type described with reference to Figure 2, and has a fluid connection to a hydraulic motor (131), preferably of the type described in EP0494236. The fluid connection between the pump and the hydraulic motor is through a high pressure line (133) and a low pressure line (135), connected to their high pressure port and low pressure port respectively, and is direct in the sense that there are no intervening valves to restrict the flow. The pump and hydraulic motor are preferably mounted directly one to the other so that the high pressure line and low pressure line are formed between and within them. A charge pump (137) continuously draws fluid from a reservoir (139) into the low pressure line, which is connected to a low pressure accumulator (141). A low pressure relief valve (143) returns fluid from the low pressure line to the reservoir through a heat exchanger (144) which is operable to influence the temperature of the working fluid and is controllable by the controller via a heat exchanger control line (146). A smoothing accumulator (145) is connected to the high pressure line between the pump and the hydraulic motor. A first high pressure accumulator (147) and a second high pressure accumulator (149) (together acting as the fluid compliance) are connected to the high pressure line through a first accumulator isolating valve (148) and a second accumulator isolating valve (150) respectively. The first and second high pressure accumulators may have different precharge pressures, and there may be additional high pressure accumulators with an even wider spread of precharge pressures. The states of the first and second accumulator isolating valves are set by the controller through first (151) and second (152) isolating valve signals respectively. Fluid pressure in the high pressure line is measured with a pressure sensor (153), which provides the controller with a high pressure line pressure signal (154). The pressure sensor may optionally also measure the fluid temperature and provide a fluid temperature signal to the controller. A high pressure relief valve (155) connects the high pressure and low pressure lines.

The hydraulic motor is connected to a generator (157), acting as the load, through a generator shaft (159). The generator is connected to an electricity network through a contactor (161), which receives a contactor control signal (162) from a generator and contactor controller (163) and is operable to selectively connect the generator to or isolate the generator from the electricity network. The generator and contactor controller receives measurements of voltage, current and frequency from electricity supply signals (167) and generator output signals (169), measured by electricity supply sensors (168) and generator output sensors (170) respectively, communicates them to the controller (112) and controls the output of the generator by adjusting field voltage generator control signals (165) in accordance with generator and contactor control signals (175) from the controller.

The pump and motor report the instantaneous angular position and speed of rotation of their respective shafts, and the temperature and pressure of the hydraulic oil, to the controller, and the controller sets the state of their respective valves, via pump actuation signals and machine shaft signals (171) and motor actuation signals and motor shaft signals (173). The controller uses power amplifiers (180) to amplify the pitch actuation signals, the accumulator isolating valve signals, the pump actuation signals and the motor actuation signals.

The WTG further comprises blade sensors (185) (which might comprise one or more of accelerometers, position sensors, velocity sensors or acoustic sensors) which communicate blade vibrations via blade sensor signals (187) to the controller.

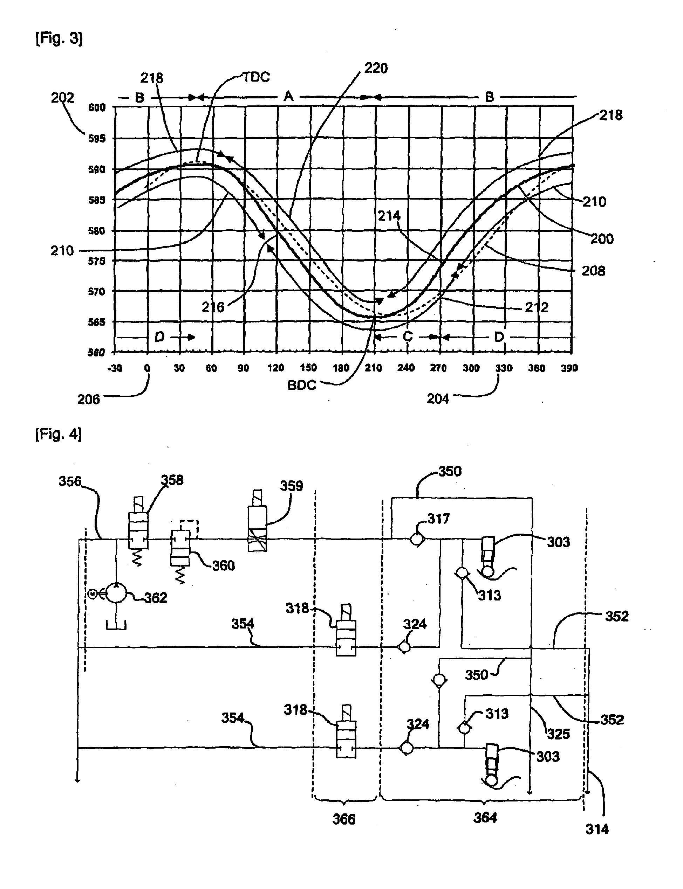

Figure 2 illustrates in schematic form a portion (301) of the pump (129) according to an embodiment of the invention. The pump is a radial piston pump. It consists of a number of similar working chambers (303) in arranged in around the circumference of the pump. The working chambers are arranged in a plurality of banks axially spaced groups. Three, circumferentially adjacent cylinders from a single bank are shown in Figure 3.

Each working chamber has a volume defined by the interior surface of a cylinder (305) and a piston (306), which is driven from a ring cam (307) by way of a roller (308), which functions as a cam engaging element, and which reciprocates within the cylinder to cyclically vary the volume of the working chamber. The ring cam may be broken into segments mounted on the shaft (322), which is firmly connected to the rotor shaft (125). Fluid pressure within the low pressure manifold (314) and thus the working chambers, greater than the pressure surrounding the ring cam, or alternatively a spring (not shown), keeps the roller in contact with the ring cam. A shaft position and speed sensor (309) determines the instantaneous angular position and speed of rotation of the shaft, and informs a controller (112), by way of electrical connection (311, being some of the pump actuation and machine shaft signals 171), which enables the controller to determine the instantaneous phase of the cycles of each individual working chamber. The controller is typically a microprocessor or microcontroller, which executes a stored program in use. The controller can take the form of a plurality of microprocessors or microcontrollers which may be distributed and which individually carry out a subset of the overall function of the controller.

There may be more than one bank of axially-spaced ring cams, the surfaces of which rotate together. Each banks of cylinders might be driven by a separate axially-spaced ring cam.

Each working chamber comprises a low pressure valve (LPV) in the form of an electronically actuated face-sealing poppet valve (313) which faces inwards toward the working chamber and is operable to selectively seal off a channel extending from the working chamber to a low pressure manifold (314), which functions generally (in the normal pumping mode) as a net source of fluid in use (or sink in the case of the motoring mode). The low pressure conduit is fluidically connected to the low pressure line (135). The LPV is a normally open solenoid closed valve which opens passively when the pressure within the working chamber is less than the pressure within the low pressure conduit, during an intake stroke, to bring the working chamber into fluid communication with the low pressure manifold, but is selectively closable under the active control of the controller via an electrical LPV control signal (315, being some of the pump actuation and machine shaft signals 171) to bring the working chamber out of fluid communication with the low pressure manifold. Alternative electronically controllable valves may be employed, such as normally closed solenoid opened valves.

The working chamber further comprises a primary high pressure valve (HPV, 317) in the form of a pressure actuated delivery valve. The primary HPV faces outwards from the working chamber and is operable to seal off a channel extending from the working chamber to a high pressure manifold (319), which functions as a net source or sink of fluid in use and is in fluid communication with the high pressure line (133). Preferred configurations of the fluidic connections of the high pressure manifold are described further below.

The primary HPV is a normally-closed pressuring-opening check valve, usually a spring actuated poppet valve, which opens passively when the pressure within the working chamber exceeds the pressure within the high pressure manifold and which cannot open against a pressure differential. It opens during pumping when the pressure in the working chamber exceeds the pressure in the high pressure manifold (during an exhaust stroke, following closure of the low pressure valve) and closes when the pressure in the working chamber drops below the pressure in the high pressure manifold (at the end of an exhaust phase, once the working chamber starts to expand again).

Some of the working chambers, in this example, one of the three working chambers which are shown, have an auxiliary HPV (318) which is a solenoid operated actively controlled valve which can be opened by the controller by way of auxiliary HPV control signals (321). The auxiliary HPV is connected to the high pressure manifold (319) and thus to the high pressure line (133) through branch channels (323), one of which is shown in Figure 2.

In a normal mode of operation described in the prior art (for example, EP 0 361 927, EP 0 494 236, and EP 1 537 333), the pump carries out pumping cycles, thereby turning energy received from the wind through rotation of the rotating drive shaft into fluid energy in the form of pressurised fluid in the high pressure line.

The controller selects the net rate of displacement of fluid to the high pressure manifold by the hydraulic pump by actively closing one or more of the LPVs typically near the point of maximum volume in the associated working chamber's cycle, closing the path to the low pressure manifold and thereby directing fluid out through the associated primary HPV on the subsequent contraction stroke. The controller selects the number and sequence of LPV closures to produce a flow or apply a torque to the shaft (322) to satisfy a selected net rate of displacement. As well as determining whether or not to close or hold open the LPVs on a cycle by cycle basis, the controller is operable to vary the precise phasing of the closure of the LPVs with respect to the varying working chamber volume and thereby to select the net rate of displacement of fluid from the low pressure manifold to the high pressure manifold. However, for most strokes, during normal operation, the low pressure valve is closed when the volume of the working chamber is within 10% of its maximum, to maximise efficiency.

In the normal operating mode of selectively actuated pumping strokes, the ring cam of the present example rotates in the clockwise direction as illustrated in Figure 2 (note that Figure 2 illustrates the pump viewed from the opposite direction to its illustration in Figure 1). As will be described there is an alternative motoring mode in which the ring cam rotates in an anticlockwise direction. Of course, in some embodiments the ring cam may rotate in an anticlockwise direction during normal pumping and in a clockwise direction in the motoring mode.

The controller is operable to use blade sensor signals (187) to select the timing of the opening and closing of the valves and thus schedule in time and angle the application of torque to the ring cam (and delivery or acceptance of flow to the high-pressure manifold) by the working chambers. One possible technique for this is disclosed in WO 2011/104543 (Salter et al.), which is hereby incorporated by reference.

The working chambers of the pump are canted. They do not point directly radially outwards. The working chambers are canted about 10° in the clockwise direction in Figure 2.

Figure 3 shows one section of the cain profile (200) of the pump of Figure 2, on which the roller (308) rolls in use. The profile is repeated typically 15-25 times on each ring cam bank, and forms an effectively continuous working surface around the ring cam. The cam profile is defined by the radius in mm (202) from the centre of rotation of the ring cam and the angle (204) from an arbitrary reference point (206) through one cycle of working chamber volume of the pump. The relative scale of the axes of Figures 3 has been selected for clarity and so does not accurately portray the depth of the profile compared to the pitch (A) between the maxima (TDC) and the next adjacent minimum (BDC), nor the pitch (B) between minima (BDC) and the next maximum (TDC). Figure 3 also shows a reference (sine wave) cam profile (208) to illustrate the difference between the ring cam and a conventional ring cam. The ring cam profile does not have reflection symmetry about any shaft angle, unlike a sine wave profile.

The profile comprises a convex section (210) and a concave section (212), which meet at working (214) and breathing (216) points of inflexion. The working surface comprises a working face (218) extending over those areas of the working surface on which the roller rolls at any time when, in the normal operating (pumping) mode, the pressure in the working chamber significantly exceeds the pressure in the low-pressure manifold, for example it is over 100 Bar, due to the selective opening and closing of low and primary high pressure valves (313,317) under the control of the controller. The working surface also comprises a breathing face (220) that extends over those areas of the working surface which are not subjected to forces from significant working chamber pressure, in the normal operating (pumping) mode.

The working faces form the majority of the face of the working surface extending over region B (which functions as the working face), and the breathing faces comprise the majority of the face of the working surface extending over region A (which functions as the breathing face). However, they do not align perfectly because of the compressibility of typical working fluids, for example hydraulic oil. At the beginning of a selected pumping stroke during normal operation, the working chamber pressure rises monotonically over a small angle after the low pressure valve closes (which typically occurs at BDC but potentially occurs anywhere when the roller bears on the region B), meaning that the working face starts a little beyond BDC. After a selected pumping stroke, the working chamber is still pressurised for a small angle after the primary high pressure valve closes at TDC, extending the working face a little beyond TDC. This allows the commutation of working chambers alternately to the high and low pressure manifolds to occur with no significant pressure across the valves, increasing the efficiency of the fluid working machine/pump and decreasing the operating noise.

In the example embodiment, the pitch (change in shaft angle A) between the maxima (TDC) and the next adjacent minimum (BDC) is less than the pitch (change in shaft angle B) between minima (BDC) and the next maximum (TDC).

Thus, in the normal operating mode, the exhaust stroke is longer than the intake stroke. Further, in use in the normal operation mode, the slope of the working faces is less than the slope of the breathing faces. The Hertzian stress in the working surface is thus reduced, in comparison to machines of the prior art in which the working and breathing faces have a similar length. The side loads of the piston against the cylinder (305) are also reduced by the reduced slope of the working faces.

The difference in shaft angle (C) between the working face point of inflexion (functioning as the point of maximum slope magnitude) and the adjacent BDC is less than the angular separation (D) between working point of inflexion and the adjacent TDC, and in this embodiment C / D < 90%. Thus, the maximum flow rate during exhaust (pumping) strokes occurs before the working chamber volume is at the mean of its volume at top dead centre and at bottom dead centre.

In the example embodiment, the maximum curvature of the convex portions of the working faces is less than one half of the maximum curvature of the convex portions of the breathing faces. Also the maximum curvature of the convex portions of the working faces is less than one half of the maximum curvature of the concave portions of the working faces.

The relatively flat, convex, region on the working face has a low curvature which reduces the Hertzian stress increase due to said convexity. In contrast, the relatively steep, concave, region has a high curvature which reduces the Hertzian stress increase due to said steepness. Due to the canting of the working chambers, the Hertzian stress in the region of the working point of inflection is minimised by the sliding axis of the working chambers being close to perpendicular to the working surface in near the working point of inflection.

The low curvature convex surface is necessarily larger (in terms of the arc subtended, and in terms of working surface area) than the high curvature concave surface, and thus, the flow rate to or from the high pressure manifold via each working chamber, and therefore the torque applied to the rotatable ring cam, is asymmetric in time and angle. This contrasts with conventional fluid-working machines using eccentric cams in which, typically to achieve a smoother aggregate flow rate to or from the high pressure manifold from a plurality of working chambers, the flow rate due to each working chamber is designed symmetric in time and angle.

The ring cam and fluid working machine has a lower stress in its working surface, and therefore longer lifetime in the normal operating mode, than conventional ring cams. However, it is difficult to carry out motoring by the method known from EP 0494236 (Salter and Rampen), with the rotating machine shaft continuing to rotate in the same direction, because forces from piston rollers arising from high pressure fluid would bear on the breathing faces, not the working faces, leading to a risk, or the likelihood of damage. However, this invention envisages an alternative motoring cycle.

### (Alternative Operating (Motoring) Mode)

In an alternative motoring mode, the controller determines which working chambers, of those which have auxiliary high-pressure valves, are at a position in the cycles of working chamber volume close to top dead centre, with the forces from the pistons via rollers bearing on their working surfaces. The auxiliary high-pressure valves of working chambers at that position in their cycles, are then opened, causing high-pressure fluid to flow into those working chambers, driving the pistons of those working chambers, which in turn drives the ring cam, in the opposite direction to the direction of rotation in the normal pumping mode. For the working chambers which have auxiliary high-pressure valves, the low-pressure valves are closed shortly before top dead centre on each cycle of working chamber volume (as the direction of rotation is different, the cam is at a position which would be shortly after top dead centre during normal pumping), and the auxiliary high-pressure valves are opened shortly after top centre, causing the pressure in the working chambers to bear on the working surfaces of the ring cam. For the remaining working chambers, which do not have auxiliary high-pressure valves, the low-pressure valves are held open, so that these chambers do not exert pumping torque which would be opposite to the torque created by the motoring chamber.

The pump is operated in the alternative motoring mode until the rotating drive shaft, and thus the rotor and blades attached to the rotor, have reached the desired orientation, whereupon it is stopped. The drive shaft can then be fixed in position, for example with a pin. This can be very useful for maintenance of a wind turbine generator, such as an offshore wind turbine generator, for example this mode can be used to rotate the rotor until the blades are in a suitable position to facilitate landing of a helicopter on top of the nacelle.

As a result, it is possible for the pump to function as a motor with only minimal additional components and without affecting the primary high pressure valves. Furthermore, the greatest forces bear on the working surfaces, which are better adapted to bear large forces, and not the breathing surfaces upon which the greatest forces would bear if the rotating machine shaft rotated in the same direction and the operating cycle disclosed in EP 0494236 was followed.

The low pressure valves are typically opened close to top dead centre but may be opened when the volume of the working chamber is less than the mean of the minimum and maximum volume of the working chamber during operation.

### (Fluid Connections)

With reference to Figure 4 which shows fluid connections to the working chambers within the pump, the low-pressure manifold (314) comprises a plurality of low pressure branch channels (352) which supply fluid to each of the working chambers (303), through the low-pressure valves (313). Similarly, the high-pressure manifold comprises a plurality of primary high pressure branch channels (350) which supply fluid to the primary high-pressure valves (317). The various high pressure branch channels meet at a high-pressure merging channel (325) which extends to the high-pressure line (133).

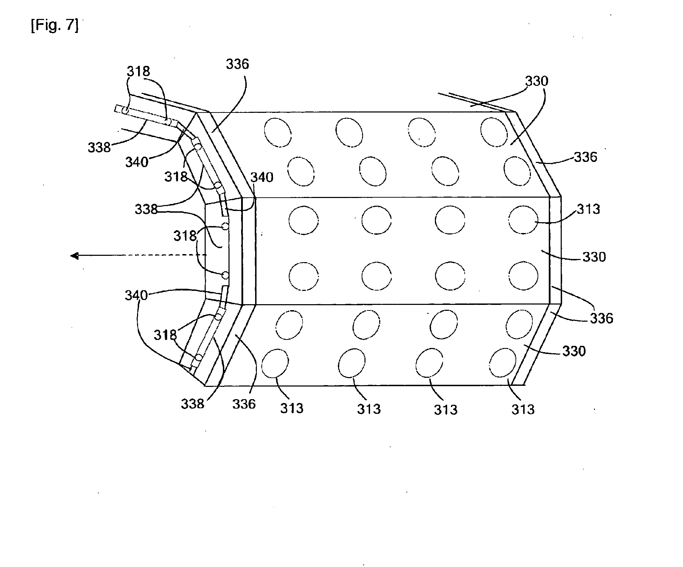

Only some of the working chambers have auxiliary high-pressure valves (318). This is advantageous as it reduces the total amount of working chamber dead volume caused by the presence of such valves, and it also reduces the total component count if for example an auxiliary high pressure valve was provided for each working chamber. Although shown as solenoid actuated valves, alternative actuation means may be possible. Anti-return check valves (324) are provided between the auxiliary high-pressure valves and the working chambers to prevent the return of pressurised fluid from the working chambers into the auxiliary manifold. The working chambers, primary high pressure valves, low pressure valves and anti-return check valves in region (364) of Figure 4 are provided within cylinder blocks and the auxiliary high pressure valves in region (366) of Figure 4 are provided in an auxiliary ring with a single inlet and a plurality of auxiliary high-pressure valves, which is described further below with reference to Figure 7.

The auxiliary high-pressure valves are supplied with high-pressure fluid through auxiliary channels (354), which merge into a single auxiliary supply line (356) which communicates with the high-pressure line through the high-pressure manifold. The single auxiliary supply line can be shut off using a shut-off valve (358), functioning as the isolating valve, which has the effect of isolating all of the auxiliary channels at once. In series with the shut-off valve there may also be provided a solenoid operated proportional valve (359) which acts to throttle the flow of fluid that is fed to the working chambers, and thus directly controls the speed of motoring. The single auxiliary supply line, the plurality of auxiliary channels, the proportional isolation valve, and the shut-off valve together function as the auxiliary manifold. Therefore, if there is a failure in one of the auxiliary high-pressure valves, particularly a failure which causes one auxiliary high-pressure valve to remain open, the auxiliary high-pressure valves can be isolated. This is important, because the motoring mode is only required very occasionally, and it is advantageous to be able to continue with a reliable pumping even if there is a failure in a single auxiliary high-pressure valve which affects the motoring mode. Without the shut off valve, a failure of the auxiliary high pressure valve could cause a cylinder to execute a motoring cycle during an otherwise normal pumping operation, which could expose that cylinder to potential damage.

The ring cam is optimised for pumping. Accordingly, it is possible that it would be damaged by excessive high-pressure fluid whilst motoring. Accordingly, a pressure reducing valve (360), e.g. a pilot operated, normally open valve, is also provided in a single auxiliary supply line, to reduce the pressure in the auxiliary channels to below the high-pressure manifold pressure.

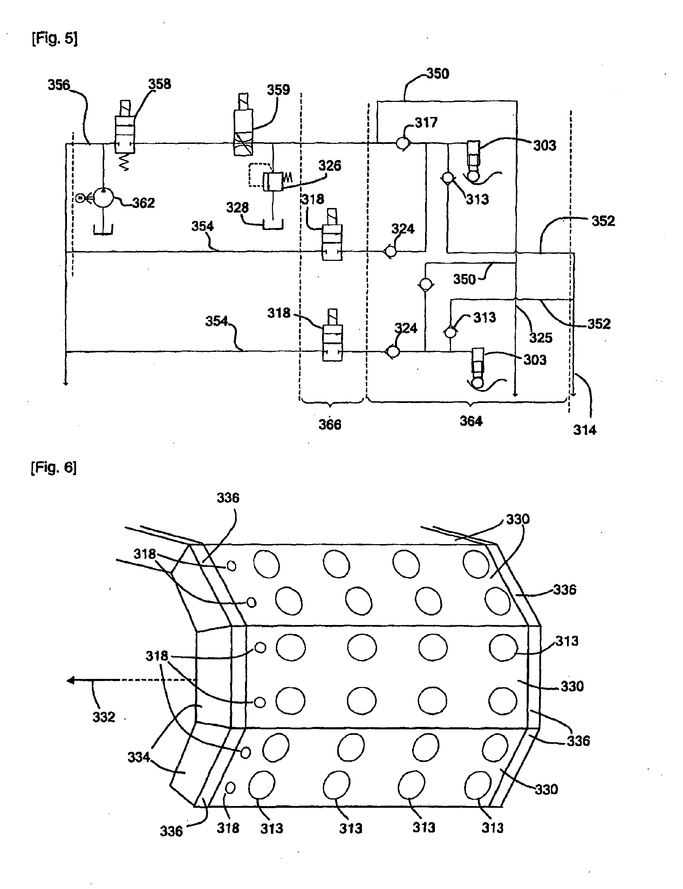

Figure 5 illustrates an alternative embodiment in which instead of a pressure reducing valve, a pressure relief valve (326) is provided in communication with the auxiliary manifold which limits the pressure of hydraulic fluid supplied to the auxiliary high pressure valves,. When the pressure of hydraulic fluid in the auxiliary manifold exceeds a threshold, hydraulic fluid drains to a sink (typically the low pressure manifold or a tank) through the pressure relief valve (326), which directs hydraulic fluid to a tank (328).

The particular set pressure for the pressure reducing valve, or the alternate pressure relief valve in branch channel, is chosen such that when the proportional valve demands maximum motoring pressure, the fluid pressure is limited and thus the force produced at the cam roller interface is also limited. Due to limitations of the mechanism, the maximum pressure acceptable at the cam roller interface may be lower in the motoring mode than it is in the pumping mode.

In alternative embodiments a single valve could function to both reduce pressure and throttle the flow of fluid to the working chambers. Either or both of these functions could also be performed by the auxiliary high-pressure valves.

In the motoring mode, in contrast to normal operation, high-pressure fluid has been removed from, rather than introduced into the high-pressure manifold. Accordingly, the pressure in the high-pressure manifold may be insufficient to carry out the required motoring. Therefore, an auxiliary pump (362), such as an electric pump, is provided to pump additional fluid from the low-pressure manifold to the high-pressure manifold. In practice, as the auxiliary pump is usually of relatively low capacity, the pressure in the high-pressure manifold can drop during motoring, because the flow leaving the system is greater than the flow entering the system. This may cause oscillation of the pressure, and even cavitation if the pressure falls too far. Accordingly, the controller is preferably operable to limit the rate of motoring, or stop the motoring mode for a period of time, while the auxiliary pump maintains pressure in the high-pressure manifold above a threshold. Additionally, this threshold minimum pressure is required in the high-pressure manifold in order to seat (seal) the primary high pressure valves, otherwise the valves may open due to variations in pressure within the working chamber.

The rate of rotation of the rotating machine shaft (and rotating drive shaft) in the alternative motor mode is much smaller than the rate of rotation (in the other direction) in the normal pumping mode. This is acceptable, because the alternative motoring mode is usually only required to rotate the rotating drive shaft, and thus the rotor and any blades which are attached, by less than one full revolution. By accepting that rotation will be relatively slow, and by the configuration of the machine, it has been possible to add a motoring function to an existing pump, without compromising the long-term reliability of operation of the pump. The motoring functionality is a discrete function from the normal pumping functionality and the wind turbine generator can generate power as normal even if there is a failure in the motoring functionality.

The auxiliary high pressure valves have smaller capacity than the primary high pressure valves, that is for a given pressure differential across the respective valves, the rate of flow of fluid through the auxiliary high pressure valves is less (typically substantially less) than through the primary high pressure valves. Thus they can be smaller than the primary high pressure valves, and of more appropriate capacity given the reduced flow rate in the motoring mode.

With reference to Figure 6, the cylinders which make up the working chambers are typically formed into one or more cylinder blocks (330) and arranged around pump axis of rotation (332) in a grid, with a plurality of radially disposed axially extending banks. The cylinder blocks are held in place at their axial ends by end plates (336) to which they are demountably fixed. The cylinders extend radially inwards (either directly or at a small angle to directly radially inwards) extend into the cylinder blocks and Figure 6 illustrates the low pressure valves (313) which are located directly radially outwards of the cylinders and thereby indicate the position of the underlying cylinders. The working chambers which have auxiliary high-pressure valves (318) are located at an axial end (334) of the cylinder blocks and they regulate the flow of pressurised fluid into the cylinders closest to the axial end. (In some embodiments where there are a relatively large number of axially displaced banks, they may be located at both axial ends of the cylinder block and regulate the flow of pressurised fluid into the cylinders closest to both axial ends). This means that the auxiliary high pressure valves can be readily repaired and also reduces the volume occupied by the auxiliary branches of the high pressure manifold required to supply fluid to the working chambers with auxiliary high-pressure valves.

In an alternative embodiment illustrated in Figure 7, hydraulic fluid is supplied to the working chambers in the motoring mode through auxiliary high-pressure valves (318) located in auxiliary blocks (338) which are separate components to the cylinder blocks and located axially of the axial end faces of the cylinder blocks. The auxiliary blocks are connected by auxiliary high pressure manifold sections (340) and so the auxiliary manifold comprising the auxiliary blocks and auxiliary high pressure manifold sections extends circumferentially around the axial end faces of the cylinder blocks. The auxiliary blocks and auxiliary manifold are located on the end plates (336) and communicate with the cylinder blocks through the end plates. As with the embodiment of Figure 6 the auxiliary high-pressure valves supply hydraulic fluid to the cylinders located at the axial end of the cylinders blocks to which the auxiliary high-pressure valves are mounted. Auxiliary blocks and manifold sections could be provided on both axial ends of the cylinder blocks where required. In an embodiment, there is a pair of auxiliary high pressure valves for each block, and each of these valves accesses a single working chamber.

Preferably there is one auxiliary block mounted to each cylinder block (directly or through an end plate) through an axial end face of the cylinder block. Alternatively auxiliary blocks may span between cylinder blocks, or there may be one auxiliary block per auxiliary high pressure valve. In this embodiment, there is one auxiliary high pressure valve per working chamber, and this is mounted to the adjacent auxiliary block. In this embodiment, an auxiliary pump supplies pressurised fluid to a HP manifold (this manifold may be an additional external one, or the main internal one used for normal pump operation).

In the embodiment of Figures 4 and 7, hydraulic fluid is supplied to the cylinders by way of the auxiliary ring (366) made up of the auxiliary blocks (338) and auxiliary high pressure manifold sections (340) which extends circumferentially around an axial end of the cylinder blocks.

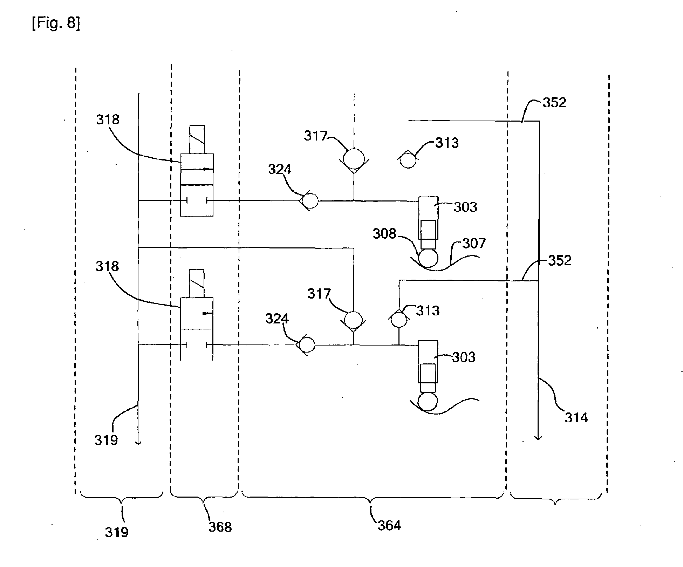

However, with reference to Figure 8 hydraulic fluid can alternatively be supplied to the cylinders (303) from the main high pressure manifold (319) which extends to the components located within the various cylinder blocks (364) through auxiliary high pressure valves (318) located on the cylinder blocks (368). This is the arrangement for hydraulic fluid supply in the embodiment of Figure 6.

In further embodiments, the auxiliary pump is directly connected to the shut-off valve/proportional isolation valve, and is no longer connected to the high pressure manifold. Thus, instead of regulating the flow of high pressure fluid from the high pressure manifold to the working chambers in parallel with the primary high pressure valves, the auxiliary valves regulate the flow of pressurised fluid from the auxiliary pump through the auxiliary manifold to the working chambers. Because the main high pressure accumulator is connected to the high pressure manifold, and is not part of the circuit which the auxiliary pump connects to, the pump is hydraulically stiff. This hydraulic stiffness is preferable especially during start of motoring of the pump, as otherwise there may be oscillation of the rotational speed around the target setpoint. This oscillation would manifest itself at startup as there may be a certain level of stiction to overcome, which once overcome, causes the motor to accelerate leading to a burst in speed. Additionally, there may be a delay in the start of the motoring mode which may be due to time taken waiting for the large accumulator to charge. Depending on the time, such delay may be unacceptable.

Further modifications and variations may be made within the scope of the invention herein described.

### Reference Numerals

- 100: Wind turbine generator (power generating apparatus of a renewable energy type)
- 101: Electricity network
- 103: Nacelle
- 105: Tower
- 107: Hub
- 109: Blades
- 111: Anemometer
- 112: Controller
- 113: Measured wind speed signal
- 115: Rotor speed sensor
- 117: Rotor speed signal
- 119: Pitch actuator
- 121: Pitch sensing signals
- 125: Rotating drive shaft
- 127: Direction of rotor rotation during normal (pumping) operation
- 129: Pump
- 131: Hydraulic motor
- 133: High pressure line
- 135: Low pressure line
- 137: Charge pump
- 139: Reservoir
- 141: Low pressure accumulator
- 143: Low pressure relief valve
- 144: Heat exchanger
- 145: Smoothing accumulator
- 146: Heat exchanger control line
- 147: First high pressure accumulator
- 148: First accumulator isolating valve
- 149: Second high pressure accumulator
- 150: Second accumulator isolating valve
- 151: First isolating valve signal
- 152: Second isolating valve signal
- 153: Pressure sensor
- 154: High pressure line pressure signal
- 155: High pressure relief valve
- 157: Generator
- 159: Generator shaft
- 161: Contactor
- 162: Contactor control signal
- 163: Contactor controller
- 167: Electricity supply signals
- 168: Electricity supply sensors
- 169: Generator output signals
- 170: Generator output sensors
- 171: Machine shaft signals
- 173: Motor shaft signals
- 175: Contactor control signals
- 180: Power amplifiers
- 185: Blade sensors
- 187: Blade sensor signals
- 200: Cam profile
- 202: Radius
- 204: Angle
- 206: Reference point
- 208: Reference (sine wave) cam profile
- 210: Convex section
- 212: Concave section
- 214: Working point of inflexion
- 216: Breathing point of inflexion
- 218: Working face
- 220: Breathing face
- 301: Portion of pump
- 303: Working chambers
- 305: Cylinders
- 306: Pistons
- 307: Ring cam
- 308: Roller (cam engaging element)
- 309: Shaft position and speed sensor
- 311: Electrical connection
- 313: Low pressure valve
- 314: Low pressure manifold
- 315: Electrical LPV control signal
- 317: Primary high pressure valve
- 318: Auxiliary high pressure valve
- 319: High pressure manifold
- 321: Auxiliary high pressure valve control signals
- 322: Rotating machine shaft
- 323: Branch channels
- 324: Anti-return check valves
- 325: High pressure merging channel
- 326: Pressure relief valve
- 328: Tank
- 330: Cylinder block
- 332: Axis of rotation
- 334: Axial end of cylinder block
- 336: End plates
- 338: Auxiliary block
- 340: Auxiliary high pressure manifold section
- 350: High pressure branch channels
- 352: Low pressure branch channels
- 354: Auxiliary channels
- 356: Auxiliary supply line
- 358: Shut-off valve (isolation valve)
- 360: Pressure reducing valve
- 362: Auxiliary pump
- 364: Components housed within cylinder blocks
- 366: Components housed in auxiliary ring
- 368: Components housed on cylinder blocks

## Claims

1. Power generating apparatus of a renewable energy type which generates power from a renewable energy source, comprising:
a rotating drive shaft driven by the renewable energy source during normal operation; a hydraulic pump having a rotating machine shaft driven by the rotating drive shaft; at least one hydraulic motor which is driven by pressurized hydraulic fluid supplied from the hydraulic pump; a generator coupled to the hydraulic motor; a high pressure line through which a discharge side of the hydraulic pump is in fluid communication with an intake side of the hydraulic motor; and a low pressure line through which an intake side of the hydraulic pump is in fluid communication with a discharge side of the hydraulic motor,
wherein the hydraulic pump comprises:
a controller, a high pressure manifold in communication with the high pressure line, a low pressure manifold in communication with the low pressure line, a plurality of working chambers, each of which is defined by a cylinder and a piston reciprocating within the cylinder; a plurality of electronically controlled low pressure valves for regulating the flow of hydraulic fluid between the working chambers and the low pressure manifold and a plurality of primary high pressure valves for regulating the flow of hydraulic fluid between the working chambers and the high pressure manifold,
wherein the controller is configured to close the low pressure valves in phased relation to cycles of working chamber volume during selected cycles of working chamber volume to cause the rotating machine shaft to rotate in a normal direction of rotation and the hydraulic pump to pump a variable displacement of working fluid during normal operation,
**characterized in that**: the plurality of primary high pressure valves cannot open against a pressure differential; the hydraulic pump comprises plurality of auxiliary high pressure valves for regulating the flow of hydraulic fluid between a source of pressurized hydraulic fluid and at least some of the working chambers, which are actively controlled and can open against a pressure differential; the controller is also configured to actively control the auxiliary high pressure valves in phased relation to cycles of working chamber volume to cause the hydraulic pump to operate in a motoring mode in which the rotating machine shaft rotates in the opposite direction to the normal direction of rotation and selected low pressure valves are closed when the respective working chambers have a volume less than the mean of the maximum and minimum of working chamber volume during cycles of working chamber volume to facilitate opening of the auxiliary high pressure valves; and the primary high pressure valves and auxiliary high pressure valves are configured such that, for the same pressure difference across the respective valves, the rate of flow of hydraulic fluid through the auxiliary high pressure valves is less than the rate of flow of hydraulic fluid through the primary high pressure valves.

2. Power generating apparatus of a renewable energy type according to claim 1, wherein the pump comprises a rotating machine shaft having a cam which drives cycles of working chamber volume during normal operation, wherein the cam is configured such that the variation in working chamber volume with machine shaft angle does not have reflection symmetry about any shaft angle.

3. Power generating apparatus of a renewable energy type according to claim 1, wherein the rotating machine shaft has a cam which drives cycles of working chamber volume during normal operation, wherein the cam has working faces which drive the pistons when pressurised hydraulic fluid is delivered to the high pressure manifold through the primary high pressure valves, during normal operation, and breathing faces which drive the pistons when hydraulic fluid is received from the low pressure manifold through the low pressure valves during normal operation, wherein the angle by which the shaft rotates while the pistons bear on the working faces is greater than the angle by which the shaft rotates while the pistons bear on the breathing faces.

4. Power generating apparatus of a renewable energy type according to claim 1, wherein the auxiliary high pressure valves can supply high pressure fluid to only a subset of working chambers.

5. Power generating apparatus of a renewable energy type according to claim 1, wherein the high pressure manifold communicates with an auxiliary manifold which extends to the auxiliary high pressure valves, the auxiliary manifold comprising a single auxiliary supply line and a plurality of auxiliary channels which merge into the single auxiliary supply line through which the auxiliary channels communicate with the high pressure line, the apparatus further comprising an isolation valve to selectively isolate the auxiliary manifold and thereby the auxiliary high pressure valves from the high pressure line.

6. Power generating apparatus of a renewable energy type according to claim 1, comprising at least one pressure reducing element to reduce the pressure of the hydraulic fluid supplied to the auxiliary high pressure valves to below the pressure in the high pressure line.

7. Power generating apparatus of a renewable energy type according to claim 1, wherein at least one individual auxiliary high pressure valve within the plurality of auxiliary high pressure valves regulates the flow of high pressure fluid to a plurality of working chambers.

8. Power generating apparatus of a renewable energy type according to claim 1, wherein the rotating machine shaft has a plurality of cams disposed circumferentially around the rotating shaft, which drive the pistons during normal operation, wherein the high pressure manifold includes primary branch channels which extend to the primary high pressure valves and merge into a high pressure merging channel through which the primary branch channels communicate with the high pressure line; the low pressure manifold includes low pressure branch channels which extend to the low pressure valves and merge into a low pressure merging channel through which the low pressure branch channels communication with the low pressure line; the pump comprises a casing which accommodates the working chambers, the high pressure manifold, the low pressure manifold, the primary high pressure valves, the auxiliary high pressure valves and the low pressure valves; and wherein the auxiliary high pressure valves supply high pressure fluid to only a subset of working chambers.

9. Power generating apparatus of a renewable energy type according to claim 1, wherein the cylinders are formed into a plurality of banks and the cylinders are formed into one or more cylinder blocks defining an end face at an axial end, wherein the auxiliary high pressure valves are formed in the axial end face.

10. Power generating apparatus of a renewable energy type according to claim 1, wherein the controller selects the fraction of cycles of working chamber volume for which the low pressure valves are closed and the auxiliary high pressure valves are opened, causing the working chamber to execute an active cycle in which there is a net displacement of working fluid and/or selects the timing of closure of the selected low pressure valves and/or timing of opening of the auxiliary high pressure valves in the motoring mode relative to cycles of working chamber, to thereby select the amount of working fluid displaced during each motoring cycle and thereby control the speed of rotation of the rotating shaft.

11. Power generating apparatus of a renewable energy type according to claim 1, further comprising an auxiliary pump which is operable to output pressurised fluid to the auxiliary high pressure valves, wherein the controller is operable to temporarily stop closing selected low pressure valves and opening auxiliary high pressure valves in the motoring mode if the pressure of hydraulic fluid supplied to the auxiliary high pressure valves falls below a threshold while the auxiliary pump functions and thereby increases the pressure of hydraulic fluid supplied to the auxiliary high pressure valves.

12. Power generating apparatus of a renewable energy type according to claim 1, further comprising a fluid accumulator in continuous or selective communication with the high pressure line, wherein the high pressure fluid from the auxiliary pump bypasses the fluid accumulator.

13. Power generating apparatus of a renewable energy type according to claim 1, further comprising a sensor for determining the position of the rotating drive shaft wherein the controller is configured (e.g. programmed) to cause the pump to operating in the motoring mode until the rotating drive shaft has reached a predetermined position and then to stop rotation of the pump.

14. Power generating apparatus of a renewable energy type according to claim 1, wherein the power generating apparatus is a wind turbine generator which generates power from wind as the renewable energy source.

15. A method of operating a power generating apparatus of a renewable energy type according to claim 1, the method comprising operating the pump in a motoring mode by actively controlling the auxiliary high pressure valves in phased relation to cycles of working chamber volume to cause the rotating machine shaft to rotate in the opposite direction to the normal direction of rotation and closing selected low pressure valves when the respective working chambers have a volume less than the mean of their maximum and minimum of working chamber volume during cycles of working chamber volume.

## Patentansprüche

1. Vorrichtung zur Stromerzeugung über erneuerbare Energie, die Strom aus einer Quelle erneuerbare Energie erzeugt, umfassend:
eine Drehantriebswelle, die von der Quelle erneuerbarer Energie während des Normalbetriebs angetrieben wird;
eine Hydraulikpumpe mit einer Drehmaschinenwelle, die von der Drehantriebswelle angetrieben wird;
mindestens einen Hydraulikmotor, der von druckbeaufschlagtem Hydraulikfluid angetrieben wird, das aus der Hydraulikpumpe zugeführt wird;
einen Generator, der mit dem Hydraulikmotor gekoppelt ist;
eine Hochdruckleitung, durch die eine Ablassseite der Hydraulikpumpe in Fluidverbindung mit einer Einlassseite des Hydraulikmotors steht; und
eine Niederdruckleitung, durch die eine Einlassseite der Hydraulikpumpe in Fluidverbindung mit einer Auslassseite des Hydraulikmotors steht; wobei die Hydraulikpumpe umfasst:
eine Steuerung, einen Hochdruckkrümmer in Verbindung mit der Hochdruckleitung, einen Niederdruckkrümmer in Verbindung mit der Niederdruckleitung, mehrere Arbeitskammern, die jeweils von einem Zylinder und einem sich hin- und her bewegenden Kolben innerhalb des Zylinders definiert werden;
mehrere elektronisch gesteuerte Niederdruckventile zum Regulieren der Strömung von Hydraulikfluid zwischen den Arbeitskammern und dem Niederdruckkrümmer und mehrere primäre Hochdruckventile zum Regulieren der Strömung von Hydraulikfluid zwischen den Arbeitskammern und dem Hochdruckkrümmer,
wobei die Steuerung zum Schließen der Niederdruckventile konfiguriert ist, die während ausgewählter Arbeitskammervolumen-Zyklen in Phasenbeziehung mit Zyklen des Arbeitskammervolumens stehen, um zu bewirken, dass sich die Maschinenwelle in normale Drehrichtung dreht und die Hydraulikpumpe eine Arbeitsfluid während des Normalbetriebs verstellbar pumpt,
**dadurch gekennzeichnet, dass**
sich die mehreren primären Hochdruckventile nicht entgegen eines Druckunterschieds öffnen können;
die Hydraulikpumpe mehrere Hilfshochdruckventile zum Regulieren der Strömung von Hydraulikfluid zwischen einer Quelle von druckbeaufschlagten Hydraulikfluid und mindestens einigen der Arbeitskammern umfasst, die aktiv gesteuert werden und sich entgegen eines Druckunterschieds öffnen können;
wobei die Steuerung auch konfiguriert ist, die Hilfshochdruckventile in Phasenbeziehung mit den Zyklen des Arbeitskammervolumens aktiv zu steuern, um zu bewirken, dass die Hydraulikpumpe in einem Motormodus betrieben wird, in dem sich die Drehmaschinenwelle in die Gegenrichtung der normalen Drehrichtung dreht und ausgewählte Niederdruckventile geschlossen werden, wenn die zugehörigen Arbeitskammern ein Volumen von weniger als dem Mittelwert zwischen Maximum und Minimum des Arbeitskammervolumens während der Zyklen des Arbeitskammervolumens aufweisen, um das Öffnen der Hilfshochdruckventile zu ermöglichen; und
die primären Hochdruckventile und Hilfshochdruckventile derart konfiguriert sind, dass für den gleichen Druckunterschied zwischen den zugehörigen Ventilen die Strömungsrate von Hydraulikfluid durch die Hilfshochdruckventil geringer ist als die Strömungsrate von Hydraulikfluid durch die primären Hochdruckventile.

2. Vorrichtung zur Stromerzeugung über erneuerbare Energie nach Anspruch 1, wobei die Pumpe eine sich drehende Maschinenwelle mit einem Nocken umfasst, der Zyklen der Arbeitskammer, des Volumens bei Normalbetrieb antreibt, wobei der Nocken so konfiguriert ist, dass die Variation im Arbeitskammervolumen mit dem Maschinenwellenwinkel keine Spiegelsymmetrie mit einem der Wellenwinkel aufweist.

3. Vorrichtung zur Stromerzeugung über erneuerbare Energie nach Anspruch 1, wobei die Drehmaschinenwelle einen Nocken aufweist, der Zyklen des Arbeitskammervolumens während des Normalbetriebs antreibt, wobei der Nocken Arbeitsflächen , welche die Kolben antreiben, wenn druckbeaufschlagtes Hydraulikfluid dem Hochdruckkrümmer durch die primären Hochdruckventile während des Normalbetriebs zugeführt wird, und Atmungsflächen aufweist, welche die Kolben antreiben, wenn Hydraulikfluid aus dem Niederdruckkrümmer durch die Niederdruckventile während Normalbetriebs erhalten wird, wobei der Winkel, mit dem sich die Welle dreht, während die Kolben auf den Arbeitsflächen aufliegen, größer als der Winkel ist, mit dem sich die Welle dreht, während die Kolben auf den Atmungsflächen aufliegen.

4. Vorrichtung zur Stromerzeugung über erneuerbare Energie nach Anspruch 1, wobei die Hilfshochdruckventile Hochdruckfluid nur einem Untersatz von Arbeitskammern zuführen.

5. Vorrichtung zur Stromerzeugung über erneuerbare Energie nach Anspruch 1, wobei der Hochdruckkrümmer mit einem Hilfskrümmer kommuniziert, der sich zu den Hilfshochdruckventilen erstreckt, wobei der Hilfskrümmer eine einzelne Hilfszufuhrleitung und mehrere Hilfskanäle umfasst, die in die einzelne Hilfszufuhrleitung übergehen, durch welche die Hilfskanäle mit der Hochdruckleitung kommunizieren, wobei die Vorrichtung ferner ein Absperrventil zum selektiven Isolieren des Hilfskrümmers und somit der Hilfshochdruckventile von der Hochdruckleitung umfasst.

6. Vorrichtung zur Stromerzeugung über erneuerbare Energie nach Anspruch 1, umfassend mindestens ein Druckreduktionselement, um den Druck von Hydraulikfluid, das den Hilfshochdruckventilen zugeführt wird, auf unterhalb des Drucks in der Hochdruckleitung zu reduzieren.

7. Vorrichtung zur Stromerzeugung über erneuerbare Energie nach Anspruch 1, wobei mindestens ein einzelnes Hilfshochdruckventil innerhalb der mehreren Hilfshochdruckventile die Strömung von Hochdruckfluid zu mehreren Arbeitskammern regelt.

8. Vorrichtung zur Stromerzeugung über erneuerbare Energie nach Anspruch 1, wobei die Drehmaschinenwelle mehrere Nocken aufweist, die auf dem Umfang um die Drehwelle angeordnet sind, welche die Kolben während des Normalbetriebs antreiben,
wobei der Hochdruckkrümmer primäre Zweigkanäle aufweist, die sich zu den primären Hochdruckventilen erstrecken und in einen Hochdruckübergangskanal übergehen, durch den die primären Zweigkanäle mit der Hochdruckleitung kommunizieren;
wobei der Niederdruckkrümmer Unterdruck-Zweigkanäle aufweist, die sich zu den primären Hochdruckventilen erstrecken und in einen Niederdruckübergangskanal übergehen, durch den die Niederdruck-Zweigkanäle mit der Niederdruckleitung kommunizieren;
wobei die Pumpe ein Gehäuse umfasst, das die Arbeitskammern, den Hochdruckkrümmer, den Niederdruckkrümmer, die primären Hochdruckventile, die Hilfshochdruckventile und die Niederdruckventile aufnimmt; und
wobei die Hilfshochdruckventile Hochdruckfluid nur einem Untersatz von Arbeitskammern zuführen.

9. Vorrichtung zur Stromerzeugung über erneuerbare Energie nach Anspruch 1, wobei die Zylinder in mehreren Reihen ausgebildet sind, und die Zylinder in einen oder in mehrere Zylinderblöcke eingeformt werden, die eine Endfläche an einem axialen Ende definieren, wobei die Hilfshochdruckventile in der axialen Endfläche ausgebildet sind.

10. Vorrichtung zur Stromerzeugung über erneuerbare Energie nach Anspruch 1, wobei die Steuerung den Anteil von Zyklen des Arbeitskammervolumens auswählt, für den die Niederdruckventile geschlossen und die Hilfshochdruckventile geöffnet sind, wodurch bewirkt wird, dass die Arbeitskammer einen aktiven Zyklus ausführt, bei der eine Nettoverschiebung von Arbeitsfluid stattfindet und/oder den Zeitpunkt des Schließens der ausgewählten Niederdruckventile und/oder den Zeitpunkt des Öffnens der Hilfshochdruckventile im Motormodus in Bezug auf die Zyklen der Arbeitskammer auswählt, um so die Menge von Arbeitsfluid während des Motorzyklus und dadurch die Drehzahl der Drehwelle zu steuern.

11. Vorrichtung zur Stromerzeugung über erneuerbare Energie nach Anspruch 1, ferner umfassend eine Hilfspumpe, die betrieben werden kann, um druckbeaufschlagtes Fluid den Hilfshochdruckventilen zuzuführen, wobei die Steuerung zum vorübergehenden Anhalten des Schließens von Niederdruckventilen und des Öffnens der Hilfshochdruckventile im Motormodus betrieben werden kann, wenn der Druck von Hydraulikfluid, der den Hilfshochdruckventilen zugeführt wird, unter einen Schwellenwert fällt, während die Hilfspumpe arbeitet, und dadurch den Druck von Hydraulikfluid, das den Hilfshochdruckventilen zugeführt wird, erhöht.

12. Vorrichtung zur Stromerzeugung über erneuerbare Energie nach Anspruch 1, ferner umfassend einen Fluidsammler in durchgehender oder selektiver Kommunikation mit der Hochdruckleitung, wobei das Hochdruckfluid aus der Hilfspumpe den Fluidsammler umgeht.

13. Vorrichtung zur Stromerzeugung über erneuerbare Energie nach Anspruch 1, ferner umfassend einen Sensor zum Bestimmen der Position der Drehantriebswelle, wobei die Steuerung konfiguriert (z. B. programmiert) ist, um zu bewirken, dass die Pumpe im Motormodus betrieben wird, bis die Drehantriebswelle eine vorbestimmte Position erreicht hat und dann die Drehung der Pumpe anhält.

14. Vorrichtung zur Stromerzeugung über erneuerbare Energie nach Anspruch 1, wobei die Vorrichtung zur Stromerzeugung ein Windturbinengenerator ist, der Strom aus Wind als erneuerbare Energiequelle erzeugt.

15. Verfahren zum Betreiben einer Vorrichtung zur Stromerzeugung über erneuerbare Energie nach Anspruch 1, wobei das Verfahren das Betreiben der Pumpe in einem Motormodus durch aktives Steuern der Hilfshochdruckventile in Phasenbeziehung mit den Zyklen des Arbeitskammervolumens umfasst, um zu bewirken, dass sich die Drehmaschinenwelle in die Gegenrichtung zur Normalrichtung der Drehung dreht und sich ausgewählte Niederdruckventile schließen, wenn die zugehörigen Arbeitskammern ein Volumen aufweisen, das niedriger als der Mittelwert des Maximums und Minimums des Arbeitskammervolumens während der Zyklen des Arbeitskammervolumens ist.

## Revendications

1. Appareil générateur d'électricité utilisant un type d'énergie renouvelable qui génère de l'électricité à partir d'une source d'énergie renouvelable, comprenant :
un arbre d'entraînement rotatif entraîné par la source d'énergie renouvelable pendant le fonctionnement normal ; une pompe hydraulique ayant un arbre de machine rotatif entraîné par l'arbre d'entraînement rotatif ; au moins un moteur hydraulique qui est entraîné par du fluide hydraulique sous pression fourni par la pompe hydraulique ; un générateur accouplé au moteur hydraulique ; une ligne haute pression par le biais de laquelle un côté de refoulement de la pompe hydraulique est en communication fluidique avec un côté d'admission du moteur hydraulique ;
et une ligne basse pression par le biais de laquelle un côté d'admission de la pompe hydraulique est en communication fluidique avec un côté de refoulement du moteur hydraulique,
la pompe hydraulique comprenant :
un dispositif de commande, un collecteur haute pression en communication avec la ligne haute pression, un collecteur basse pression en communication avec la ligne basse pression, une pluralité de chambres de travail, chacune d'elles étant définie par un cylindre et un piston animé d'un mouvement de va-et-vient à l'intérieur du cylindre ; une pluralité de soupapes basse pression à commande électronique pour réguler le flux de fluide hydraulique entre les chambres de travail et le collecteur basse pression et une pluralité de soupapes haute pression primaires pour réguler le flux de fluide hydraulique entre les chambres de travail et le collecteur haute pression,
le dispositif de commande étant configuré pour fermer les soupapes basse pression en relation de phase avec des cycles de volume de chambre de travail pendant des cycles sélectionnés de volume de chambre de travail pour provoquer la rotation de l'arbre de machine rotatif dans un sens de rotation normal et le pompage par la pompe hydraulique d'un déplacement variable de fluide de travail pendant le fonctionnement normal,
**caractérisé en ce que** : la pluralité de soupapes haute pression primaires ne peuvent pas s'ouvrir à l'encontre d'une pression différentielle ; la pompe hydraulique comprend une pluralité de soupapes haute pression auxiliaires pour réguler le flux de fluide hydraulique entre une source de fluide hydraulique sous pression et au moins certaines des chambres de travail, lesquelles sont commandées activement et peuvent s'ouvrir à l'encontre d'une pression différentielle ; le dispositif de commande est également configuré pour commander activement les soupapes haute pression auxiliaires en relation de phase avec les cycles de volume de chambre de travail pour amener la pompe hydraulique à fonctionner dans un mode d'entraînement dans lequel l'arbre de machine rotatif tourne dans le sens opposé au sens de rotation normal et des soupapes basse pression sélectionnées sont fermées lorsque les chambres de travail respectives ont un volume inférieur à la moyenne du maximum et du minimum de volume de chambre de travail pendant des cycles de volume de chambre de travail pour faciliter l'ouverture des soupapes haute pression auxiliaires ; et les soupapes haute pression primaires et les soupapes haute pression auxiliaires sont configurées de telle sorte que, pour la même pression différentielle à travers les soupapes respectives,
le débit de fluide hydraulique à travers les soupapes haute pression auxiliaires est inférieur au débit de fluide hydraulique à travers les soupapes haute pression primaires.

2. Appareil générateur d'électricité utilisant un type d'énergie renouvelable selon la revendication 1, la pompe comprenant un arbre de machine rotatif ayant une came qui entraîne des cycles de volume de chambre de travail pendant le fonctionnement normal, la came étant configurée de telle sorte que la variation de volume de chambre de travail en fonction de l'angle d'arbre de machine ne présente une symétrie spéculaire par rapport à aucun angle d'arbre.

3. Appareil générateur d'électricité utilisant un type d'énergie renouvelable selon la revendication 1, l'arbre de machine rotatif ayant une came qui entraîne des cycles de volume de chambre de travail pendant le fonctionnement normal, la came ayant des faces de travail qui entraînent les pistons lorsque du fluide hydraulique sous pression est refoulé jusqu'au collecteur haute pression à travers les soupapes haute pression primaires, pendant le fonctionnement normal, et des faces de ventilation qui entraînent les pistons lorsque du fluide hydraulique est reçu à partir du collecteur basse pression à travers les soupapes basse pression pendant le fonctionnement normal, l'angle suivant lequel l'arbre tourne pendant que les pistons s'appuient sur les faces de travail étant supérieur à l'angle suivant lequel l'arbre tourne pendant que les pistons s'appuient sur les faces de ventilation.

4. Appareil générateur d'électricité utilisant un type d'énergie renouvelable selon la revendication 1, les soupapes haute pression auxiliaires pouvant fournir du fluide haute pression à seulement un sous-ensemble de chambres de travail.

5. Appareil générateur d'électricité utilisant un type d'énergie renouvelable selon la revendication 1, le collecteur haute pression étant en communication avec un collecteur auxiliaire qui s'étend jusqu'aux soupapes haute pression auxiliaires, le collecteur auxiliaire comprenant une ligne d'alimentation auxiliaire unique et une pluralité de canaux auxiliaires qui se rejoignent dans la ligne d'alimentation auxiliaire unique par le biais de laquelle les canaux auxiliaires sont en communication avec la ligne haute pression, l'appareil comprenant en outre une soupape d'isolement pour isoler de manière sélective le collecteur auxiliaire, et par conséquent les soupapes haute pression auxiliaires, de la ligne haute pression.

6. Appareil générateur d'électricité utilisant un type d'énergie renouvelable selon la revendication 1, comprenant au moins un élément de réduction de pression pour réduire la pression du fluide hydraulique fourni aux soupapes haute pression auxiliaires jusqu'en dessous de la pression dans la ligne haute pression.

7. Appareil générateur d'électricité utilisant un type d'énergie renouvelable selon la revendication 1, au moins une soupape haute pression auxiliaire individuelle parmi la pluralité de soupapes haute pression auxiliaires régulant le flux de fluide haute pression vers une pluralité de chambres de travail.

8. Appareil générateur d'électricité utilisant un type d'énergie renouvelable selon la revendication 1, l'arbre de machine rotatif ayant une pluralité de cames disposées circonférentiellement autour de l'arbre rotatif, lesquelles entraînent les pistons pendant le fonctionnement normal,
le collecteur haute pression comportant des canaux de dérivation primaires qui s'étendent jusqu'aux soupapes haute pression primaires et se rejoignent dans un canal de jonction haute pression par le biais duquel les canaux de dérivation primaires sont en communication avec la ligne haute pression ;
le collecteur basse pression comportant des canaux de dérivation basse pression qui s'étendent jusqu'aux soupapes basse pression et se rejoignent dans un canal de jonction basse pression par le biais duquel les canaux de dérivation basse pression sont en communication avec la ligne basse pression ;
la pompe comprenant un carter qui contient les chambres de travail, le collecteur haute pression, le collecteur basse pression, les soupapes haute pression primaires, les soupapes haute pression auxiliaires et les soupapes basse pression ;
et
les soupapes haute pression auxiliaires fournissant du fluide haute pression à seulement un sous-ensemble de chambres de travail.

9. Appareil générateur d'électricité utilisant un type d'énergie renouvelable selon la revendication 1, les cylindres étant formés dans une pluralité de rangées et les cylindres étant formés dans un ou plusieurs bloc-cylindres définissant une face d'extrémité à une extrémité axiale, les soupapes haute pression auxiliaires étant formées dans la face d'extrémité axiale.

10. Appareil générateur d'électricité utilisant un type d'énergie renouvelable selon la revendication 1, le dispositif de commande sélectionnant la fraction de cycles de volume de chambre de travail pour laquelle les soupapes basse pression sont fermées et les soupapes haute pression auxiliaires sont ouvertes, amenant la chambre de travail à effectuer un cycle actif dans lequel il y a un déplacement net de fluide de travail et/ou sélectionnant l'instant de fermeture des soupapes basse pression sélectionnées et/ou l'instant d'ouverture des soupapes haute pression auxiliaires dans le mode d'entraînement par rapport à des cycles de chambre de travail, pour ainsi sélectionner la quantité de fluide de travail déplacée pendant chaque cycle d'entraînement et commander ainsi la vitesse de rotation de l'arbre rotatif.

11. Appareil générateur d'électricité utilisant un type d'énergie renouvelable selon la revendication 1, comprenant en outre une pompe auxiliaire qui permet de délivrer du fluide sous pression aux soupapes haute pression auxiliaires, le dispositif de commande permettant d'arrêter temporairement la fermeture de soupapes basse pression sélectionnées et l'ouverture de soupapes haute pression auxiliaires dans le mode d'entraînement si la pression de fluide hydraulique fourni aux soupapes haute pression auxiliaires tombe en dessous d'un seuil tandis que la pompe auxiliaire fonctionne et augmente ainsi la pression de fluide hydraulique fourni aux soupapes haute pression auxiliaires.

12. Appareil générateur d'électricité utilisant un type d'énergie renouvelable selon la revendication 1, comprenant en outre un accumulateur de fluide en communication continue ou sélective avec la ligne haute pression, le fluide haute pression provenant de la pompe auxiliaire contournant l'accumulateur de fluide.

13. Appareil générateur d'électricité utilisant un type d'énergie renouvelable selon la revendication 1, comprenant en outre un capteur pour déterminer la position de l'arbre d'entraînement rotatif, le dispositif de commande étant configuré (par exemple programmé) pour amener la pompe à fonctionner dans le mode d'entraînement jusqu'à ce que l'arbre d'entraînement rotatif ait atteint une position prédéterminée puis pour arrêter la rotation de la pompe.

14. Appareil générateur d'électricité utilisant un type d'énergie renouvelable selon la revendication 1, l'appareil générateur d'électricité étant un générateur éolien qui génère de l'électricité à partir de vent en tant que source d'énergie renouvelable.

15. Procédé de fonctionnement d'un appareil générateur d'électricité utilisant un type d'énergie renouvelable selon la revendication 1, le procédé comprenant le fonctionnement de la pompe dans un mode d'entraînement en commandant activement les soupapes haute pression auxiliaires en relation de phase avec des cycles de volume de chambre de travail pour provoquer la rotation de l'arbre de machine rotatif dans le sens opposé au sens de rotation normal et en fermant des soupapes basse pression sélectionnées lorsque les chambres de travail respectives ont un volume inférieur à la moyenne de leur maximum et de leur minimum de volume de chambre de travail pendant des cycles de volume de chambre de travail.
